# EUROPÄISCHE PATENTSCHRIFT

(11) **EP 3 899 494 B1**
(45) Veröffentlichungstag und Bekanntmachung des Hinweises auf die Patenterteilung: **21.09.2022**
(21) Anmeldenummer: 19827602.4
(22) Anmeldetag: 09.12.2019
(51) Int. Cl.: G01N 21/25, G01N 21/03, G01N 21/45, G02B 3/08, G02B 21/34

(54) **ANORDNUNG UND VERFAHREN ZUR ERFASSUNG VON OPTISCHEN EIGENSCHAFTEN EINER PROBE, INSBESONDERE ZUM SELEKTIVEN NACHWEIS VON BIOLOGISCHEN MOLEKÜLEN UND ZUM AUSLESEN EINER MOLEKÜLBEWEGUNG**
APPARATUS AND METHOD FOR DETERMINING OPTICAL CHARACTERISTICS OF A SAMPLE, ESPECIALLY FOR SELECTIVE DETECTION OF BIOLOGICAL MOLECULES AND FOR TRACKING MOLECULAR MOTION
ARRANGEMENT ET PROCÉDÉ POUR L'ACQUISITION DE PROPRIÉTÉS OPTIQUES D'UN ÉCHANTILLON, NOTAMMENT POUR LA DÉTECTION SÉLECTIVE DE MOLÉCULES BIOLOGIQUES ET POUR LA LECTURE DE L'OCCUPATION D'UNE MOLÉCULE

(30) Priorität: 20.12.2018 DE 102018133037
(43) Veröffentlichungstag der Anmeldung: 27.10.2021
(73) Patentinhaber: Leibniz-Institut für Photonische Technologien e.V., 07745 Jena (DE)
(72) Erfinder: POPP, Jürgen, 07751 Jena (DE); RIESENBERG, Rainer, 07749 Jena (DE); KANKA, Mario, 07751 Jena (DE); WEBER, Karina, 07751 Jena (DE)
(74) Vertreter: Donath, Dirk
(86) Internationale Anmeldenummer: PCT/DE2019/101058
(87) Internationale Veröffentlichungsnummer: WO 2020/125859

(56) Entgegenhaltungen:
- EP-A1- 1 347 284
- WO-A1-2007/077218
- WO-A1-2014/131947
- CN-A- 103 364 344
- US-A1- 2010 091 266

## Beschreibung

Die Erfindung betrifft eine Anordnung und ein Verfahren zur Erfassung von optischen Eigenschaften einer Probe, insbesondere zum selektiven Nachweis von biologischen Molekülen und zum Auslesen einer Molekülbelegung für Multiparameter-Analysen in der medizinischen Diagnostik.

Es ist seit langem bekannt, dass die spezifische Immobilisierungsreaktion von beispielsweise RNA, DNA, Peptiden und Proteinen als Fängerstrukturen für die selektive Diagnose von Molekülen genutzt wird. Die Selektivität ist dabei durch unterschiedliche lmmobilisierungsschichten gegeben, wobei oft eine monomolekulare Belegung bei einer unvollständigen Flächenbelegung nachgewiesen werden muss. Für den Nachweis der Moleküle ist dabei ein Marker (z.B. Fluoreszenzmarker, Farbmarker oder Nanopartikel) notwendig, ein entsprechender optischer Instrumentenaufwand zu treiben und die Empfindlichkeit ist oft recht begrenzt.

Derzeit sind verschiedenste optische und elektrische Ausleseverfahren zur Detektion von biologischen und/oder chemischen Spezies, insbesondere zur Detektion von An- oder Einlagerung mindestens einer stofflichen Spezies in oder an mindestens einer dünnen Schicht, bekannt, welche mit oder ohne zusätzlichen Marker betrieben werden.

So offenbart die DE 196 30 181 A1 bspw. einen kompakten Lichtleitfasersensor mit Bragg-Gitter zur Detektion chemischer oder biochemischer Substanzen ohne zusätzlichen Marker.

DE 42 00 088 A1 lehrt ein Verfahren und eine Vorrichtung zum optischen Nachweis einer An- oder Einlagerung mindestens einer stofflichen Spezies in oder an mindestens einer dünnen Schicht bei dem Licht geeigneter Wellenlänge oder eines geeigneten Spektralbereiches auf eine Probe eingestrahlt wird, an der der Vorgang an und/oder in mindestens einer dünnen Schicht aus mindestens teilweise optisch transparentem Material abläuft, wobei dabei die durch den genannten Vorgang hervorgerufenen Interferenzerscheinungen gemessen werden. Die dünne Schicht befindet sich dabei auf der Oberfläche eines handelsüblichen Interferenzfilters.

Der nachzuweisende Vorgang beruht beispielsweise auf der Wechselwirkung von mindestens zwei biochemischen Spezies und kann auch an der Oberfläche des Interferenzfilters selbst ablaufen. Ein zusätzlicher Marker ist nicht notwendig.

DE 196 12 356 A1 offenbart ein Verfahren zum Nachweis von Nukleinsäuren mittels Hybridisierung mit einer komplementären Nukleinsäure-Sonde durch einen chemisch an die Nukleinsäure oder die Nukleinsäure-Sonde gebundenen Liganden, wobei einer der Hybridisierungspartner an einen festen Träger gebunden ist, als Liganden Substanzen ausgewählt werden, die mit hoher Affinität an einen makromolekularen Binder binden, und der Binder chemisch an Detektionskügelchen gekoppelt ist, die optisch detektierbar sind. Das Nachweisverfahren ist speziell zur Durchführung auf Matrizes geeignet und damit automatisierbar.

DE 201 11 022 U1 lehrt einen Probenträger zum Nachweis biologischer oder chemischer Spezies bestehend aus einem planaren Träger, der mit einem in optisch auslesbaren Signalspuren eingeschrieben Standarddatensatz derart versehen ist, dass eine wahlweise vorgebbare Anzahl von fixierten, optisch auslesbaren Koordinaten gebildet ist und die Trägeroberfläche weiterhin mit einer vorgebbaren Anzahl einzelner und voneinander zumindest im Raster des eingeschriebenen Standarddatensatzes beabstandeter und den Koordinaten (oder eines Teils davon) mit definiert zugeordneten Bindungsflächen versehen ist, deren jeweilige Bindungsselektivität in Abhängigkeit von den an sie zu bindenden Spezies (die mit einem reflektierenden oder lichtabsorbierenden oder lichtstreuenden Marker versehen sind) vorgebbar ist, wodurch auf ausgewählten Bindungsflächen reflektierende oder lichtabsorbierende oder Streulicht verursachende Spots gebildet sind.

DE 100 36 072 A1 offenbart eine Vorrichtung zur Detektion der Änderung des elektronischen Zustandes einer Grenzfläche, insbesondere zur Detektion seltener Einzelmolekülbindungsereignisse, wobei die Vorrichtung aus voneinander beabstandeten Nanoelektroden, einem Träger, einer Grenzschicht und einem Messmodul besteht.

DE 198 60 547 C1 offenbart einen Affinitätssensor für den Nachweis spezifischer molekularer Bindungsereignisse, wie er insbesondere auf dem molekularbiologischen Gebiet, z.B. der medizinischen Diagnostik, speziell bei der Biosensor-Technologie oder im DNA-Microarray-Test, Anwendung findet und in schneller, empfindlicher, spezifischer, aufwandgeringer und routinemäßiger Weise die Anwesenheit von Molekülen, insbesondere von bioaktiven Molekülen, detektiert. Dieser Affinitätssensor besteht aus einem Trägersubstrat, das mit wenigstens zwei zueinander in einem äquidistanten Abstand angeordneten Elektroden versehen ist, die beidseitig einen Bereich erfassen, wobei zumindest dieser Bereich für die Aufnahme immobilisierter spezifischer Bindungspartner vorgesehen ist, die befähigt sind, komplementär zugehörige Bindungspartner direkt oder über weitere spezifische Bindemoleküle zu koppeln und der Bereich mit einer Mindestbreite b so festgelegt ist, dass zumindest ein komplementär zugehöriger Bindungspartner, der mit einem elektrisch leitfähigen Partikel versehen ist, im genannten Bereich aufnehmbar ist.

DE 199 43 704 C1 lehrt einen Affinitätssensor zum Nachweis biologischer und/oder chemischer Spezies, welcher eine schnelle, quantitative und aufwandsgeringe Detektion der Anwesenheit von biologischen und/oder chemischen Spezies, insbesondere auf Flächen im unteren bis mittleren Mikrometerbereich, ermöglicht. Dies erfolgt, in dem der Sensor je nach Ausleseart aus einem optisch transparenten oder teilreflektierenden Substrat besteht, das mit mehreren, voneinander beabstandeten mikrostrukturierten Bindeflächen versehen ist, deren Fläche in Relation zum Durchmesser von Nanopartikeln und oberhalb des lichtoptischen Beugungslimits so groß festgelegt ist, dass die Nanopartikel, die mit Kopplungspartnern versehen sind, welche zu den Bindeflächen oder darauf spezifisch gebundener Sequenzen (DNA) eine solche selektive Affinität aufweisen, dass sie eine anhaltende Bindung mit den Bindeflächen oder darauf spezifisch gebundener Sequenzen derart eingehen, dass auf einer oder mehreren Bindeflächen eine so große Anzahl von Nanopartikeln unter Ausbildung von Nanopartikelbelegungen anbindbar sind, dass die von der Nanopartikelbelegung eingenommene Fläche bezogen auf die Fläche einer Bindefläche mindestens 0,1% betragen kann, wobei alle Bindeflächen zusammen in einem solchen aktiven Flächenbereich angeordnet sind, dass sie gemeinsam von einem Objektiv eines üblichen lichtoptischen Mikroskops erfasst werden.

DE 103 30 717 A1 offenbart eine Vorrichtung und ein Verfahren zum Nachweis von Analyt, welche weder zwei spezifische Bindungspartner (= sandwich) für den nachzuweisenden Analyt benötigen noch eine aufwendige vorherige Markierung des Analyts einer bestimmten Molekülklasse erfordern. Dazu besteht die Vorrichtung zum Nachweis von Analyt in einer Messprobe aus einem Trägersubstrat, das mit wenigstens zwei Elektroden versehen ist, die einen Zwischenraum umgeben, der immobilisiert spezifische Bindungspartner aufweist, die befähigt sind, komplementär zugehörigen Analyt direkt oder indirekt zu koppeln, wobei der Zwischenraum in seiner Breite und Tiefe so bemessen ist, dass Bindungsereignisse der immobilisierten spezifischen Bindungspartner mit dem komplementär zugehörigen Analyt möglich sind, wobei nach erfolgten Bindungsereignissen der komplementär zugehörige Analyt gezielt mit elektrisch leitfähigem Nachweissubstrat beladbar ist und einen elektrischen Stromfluss über die im Zwischenraum bei an den Elektroden angelegter Spannung ermöglicht, wobei die Elektroden mit einer Messeinheit in Verbindung stehen, so dass der Stromfluss permanent detektierbar ist, besteht.

In der Praxis werden bei den optischen Ausleseverfahren auch optische Unterschiede, wie Unterschiede im Brechungsindex gemessen, z.B. mit spektraler Bildgebung in Reflexion oder durch Oberflächenplasmonenresonanz, wobei immer der Vergleich von einer immobilisierten Fläche zu einer nicht immobilisierten Fläche erfolgt.

Auch sind bereits Anordnungen zur Aufnahme von Bildern unter Verwendung von Detektor-Arrays bekannt, mit denen Proben, wie beispielsweise spezifische Biomoleküle, untersucht werden können (siehe dazu DE 10 2004 023 439 A1, WO 2015/011201 A1 oder DE 10 2005 023 137 A1).

DE 10 2004 023 439 A1 offenbart ein Verfahren zur Erfassung und Quantifizierung von RNA über Mikroarrays, bei dem zu einem zu untersuchenden RNA-Pool ein erstes DNA-Molekül zugesetzt wird, das zu mindestens einem ersten Bereich einer RNA von Interesse komplementär ist, und weiter am 3'- und 5'-Ende spezifische Nukleotidfolgen aufweist, die zu der RNA von Interesse in dem ersten Bereich nicht komplementär ist, sowie ein zweites DNA-Molekül, das zu einem zweiten Bereich der RNA, der verschieden ist von dem ersten Bereich, komplementär ist. Die DNA-Moleküle werden mit dem RNA-Pool unter Bedingungen in Kontakt gebracht, welche Hybridisierung komplementärer Stränge ermöglicht. Anschließend werden alle RNA-Moleküle entfernt, an die das zweite DNA-Molekül nicht hybridisiert ist. Nach Abtrennen der ersten DNA-Moleküle wird der Bereich, der zwischen den spezifischen, am 3'- und 5'-Ende vorhandenen Nukleotidfolgen, mittels zu diesen Nukleotidfolgen komplementäre Primern amplifiziert und die so erhaltenen Produkte mit einem Array in Kontakt gebracht, der an vorbestimmten Stellen Sonden aufweist, die spezifisch sind für bestimmte Nukleotidfolgen.

DE 10 2005 023 137 A1 offenbart eine Anordnung zur hochauflösenden digitalen Inline-Holographie, insbesondere Mikroskopie, die bevorzugt zur Detektion von ausgedehnten biologischen Proben mit hoher lateraler und Tiefenauflösung Verwendung findet.

Die Aufgabe, eine solche Anordnung anzugeben, die bei höchst möglicher lateraler Auflösung im Bereich von 500 nm von ausgedehnten Objekten in der Größenordnung von bis zu 3 mm gleichzeitig eine hohe Tiefenauflösung ermöglicht, die eines vergleichsweise geringen technischen Aufwands bedarf, wird gemäß DE 10 2005 023 137 A1 dadurch gelöst, dass bei Einsatz eines Detektor-Arrays und einer kohärenten Beleuchtungsquelle Proben in einer Probenebene über einem Pinholearray eingebracht sind, wobei im Pinholearray mindestens zwei Pinholes und in Relation zur Anzahl der Detektor-Pixel des Detektor-Arrays in einer Dimension eine Anzahl von bis zu einem 150tel Pinholes in der Pinholeebene in der gleichen Dimensionsrichtung vorgesehen sind, wobei die Proben eine Größenausdehnung aufweisen können, die gewährleistet, dass von den Pinholes ausgehende Lichtkegel zu mindestens 50% von den Proben ungestört zum Detektor-Array gelangen, und wobei der Pinholedurchmesser und der maximale Rasterabstand der Pinholes zueinander, einer Beziehung F1 folgend, festgelegt sind.

Der Nachteil dieser technischen Lösung besteht darin, dass der Aufwand für die Herstellung der Pinholes hoch und die nutzbare Probenfläche gering ist.

Aus der DE 10 2012 016 318 A1 ist eine Anordnung für ein linsenloses Inline Auflicht-Mikroskop bekannt, bei dem in zueinander im Wesentlichen planparalleler Anordnung ein Probenträger mit Probe, darüber in einem ersten Abstand zur Probe ein planparalleler teildurchlässiger Spiegel und zu dessen teilreflektiver Fläche in einem weiteren Abstand entfernt ein digitales, Detektor-Array [CCD, CMOS] vorgesehen sind, wobei in der effektiven Fläche des Detektor-Arrays eine punktförmige Beleuchtungsquelle zur Aussendung kohärenter Strahlung vorgesehen ist und das Verhältnis zwischen der Kantenlänge der effektiven Fläche des Detektor-Arrays zum Abstand dieser zum Probenträger in einem Bereich von 3/2 bis 4/1 gewählt ist, wobei der Leuchtspotdurchmesser der punktförmigen Beleuchtungsquelle in der Größenordnung von 500 nm festgelegt ist, die Beleuchtungsquelle durch ein Pinhole gebildet ist, welches durch das Detektor-Array durchgehend geführt ist und rückseitig des Detektor-Arrays von einer kohärenten Lichtquelle bestrahlt wird, die Beleuchtungsquelle durch eine GRIN-Stab-Linse gebildet ist, welche durch das Detektor-Array durchgehend geführt ist und mit der aktiven Detektor-Arrayfläche bündig abschließt und in die andererseits eine kohärente Lichtstrahlung eingekoppelt wird, bei größerer Querschnittsausdehnung der zum Einsatz gelangenden punktförmigen Beleuchtungsquelle dieser in der Ebene der aktiven Detektor-Arrayfläche eine Lochblende mit einem Öffnungsdurchmesser in der Größenordnung von 500 nm zugeordnet ist und die punktförmige Beleuchtungsquelle mittig auf der aktiven Fläche des Detektor-Arrays angeordnet ist.

Der Nachteil dieser technischen Lösung besteht darin, dass der Aufwand für die Herstellung der Anordnung groß und die Anzahl der verwendeten Bauteile hoch ist.

WO 2015/011201 A1 offenbart eine Vorrichtung zur Aufnahme mikroskopischer und/oder Speckle-Bildern von Proben oder Oberflächen einer Probenebene sowie deren Verwendung. Dabei ist ein Auflichtaufbau, bei dem kohärentes Licht von einer punktförmigen Beleuchtungsquelle senkrecht auf eine Probenebene gerichtet ist, vorhanden. Dabei trifft von der Probenebene und/oder einer auf der Probenebene angeordneten Probe reflektiertes Licht ohne ein im Strahlengang dazwischen angeordnetes abbildendes optisches Element auf eine effektive Fläche eines Detektor-Arrays, die parallel zur Probenebene ausgerichtet ist. Das Detektor-Array ist an eine Datenverarbeitungseinheit angeschlossen, in der eine Berechnung mikroskopischer Abbildungen und/oder von Speckle-Bilder, die in Zeitabständen M und/oder nach dem Eintreten mindestens eines Ereignisses erfasst worden sind, und weiteren daraus ableitbaren Größen erfolgt.

Der Nachteil dieser technischen Lösung besteht darin, dass bei der Bildbearbeitung zur mulitiolikativen Rauschunterdrückung ein Verlust der Auflösung, der durch die Speckle-Größe bestimmt wird, einhergeht.

Darüber hinaus haben alle zuvor stehend benannten technischen Lösungen den Nachteil, dass die Empfindlichkeit beim Nachweis von Molekülmonolagen oft nicht hoch genug und das Ausleseverfahren wenig robust ist, was insbesondere bei der Verwendung im medizinischen Praxisalltag von großer Bedeutung ist.

Weiterhin sind die auf Grundlage des Standes der Technik realisierbaren Geräte für einen mobilen Einsatz in der Regel bei hoher Empfindlichkeit und Auflösung zu groß oder die Empfindlichkeit und Auflösung sind nach einer Miniaturisierung zu gering. Das ist insbesondere für den Molekülnachweis in der medizinischen Diagnostik als Anwendungsgebiet der Anordnung und des Verfahrens von Bedeutung.

Weiterhin werden nach dem Stand der Technik nur kleine Flächen mit nur einem oder wenigen unterschiedlichen Immobilisatoren eingesetzt, womit einer effektiven gleichzeitigen Diagnose zu Feststellung verschiedener Stoffe, Moleküle oder Erreger enge Grenzen gesetzt sind.

Die Aufgabe der vorliegenden Erfindung besteht daher darin, eine Anordnung und ein Verfahren zur Erfassung von optischen Eigenschaften einer Probe, insbesondere zum selektiven Nachweis von biologischen Molekülen und zum Auslesen einer Molekülbelegung bereitzustellen, welche die zuvor stehend genannten Nachteile des Standes der Technik nicht aufweisen und insbesondere zur selektiven Detektion von An- oder Einlagerungen mindestens einer spezifischen Biomolekülspezies in oder an mindestens einer dünnen Schicht zu Zwecken der Diagnose ermöglichen.

Dabei soll die Empfindlichkeit in einer Weise erhöht werden, die das Verfahren unter Verwendung der Anordnung auch außerhalb von Labors genügend robust und massentauglich macht. Eine Markierung der spezifischen Biomoleküle, beispielsweise durch fluoreszierende Marker oder Nanopartikel, soll dabei nicht notwendig sein.

Das Dokument WO 2014/131947 A1 offenbart eine Anordnung gemäß dem Oberbegriff des Anspruchs 1.

Erfindungsgemäß wird diese Aufgabe durch die Merkmale des 1. und des 10. Patentanspruchs gelöst. Weitere günstige Ausgestaltungsmöglichkeiten der Erfindung sind in den nachgeordneten Patentansprüchen angegeben.

Im Sinne dieser Erfindung
- ist eine Lichtquelle jede Strahlungsquelle, die im Strahlungsbereich beziehungsweise Spektrum vom langwelligen Infrarot über das sichtbare bis zum kurzwelligen UV-Licht eine Strahlung (Lichtstrahlung, Lichtstrahl, Licht) aussendet;
- ist ein Trägermaterial jedes Material, dass die optischen und mechanischen Eigenschaften aufweist, die für den jeweiligen Einsatz als Probenträger und/oder zur Ausbildung einer Fesnel-Linste notwendig sind, beispielsweise Glas, Silizium, Polycarbonat; das Trägermaterial kann auch die Wandung eines Rohres, durch das die Probe geleitet wird, ober die Wandung eines Behälters sein, in dem sich die Probe befindet;
- ist eine optische Sensoreinheit jede Anordnung, mit der Licht einer Lichtquelle aufgenommen und mit deren Hilfe das aufgenommene Licht nach Stärke und/oder Farbe ausgewertet werden kann, beispielsweise Detektorarrays, CCD-Kameras, sonstige Kameras, spektroskopische Sensoren;
- ist eine Probe jede feste, flüssige oder gasförmige Substanz, auch Plasma, auch deren Gemische, deren Eigenschaften wie Struktur, Bestandteile, beispielsweise RNA/DNA, Peptiden und Proteinen, oder Fluoreszenz bestimmt werden sollen;
- ist ein Immobilisat jede Substanz, die in der Lage ist, spezifische Bestandteile einer Probe, beispielsweise Atome, Moleküle oder Mikroorganismen mindestens zeitweise festzuhalten oder soweit in ihrer Bewegung zu verlangsamen, dass eine Detektion mittels der Sensoreinheit möglich ist; ein Immobilisat kann auch ein Gemisch von Immobilisaten sein;
- ist eine Auswerteeinheit jede datenverarbeitende Einrichtung, die die Sensordaten der optischen Sensoreinheit auswerden kann, beispielsweise ein Personalcomputer, ein spezieller Bildverarbeitungscomputer, ein Smartphone oder ein in eine Cloud ausgelagertes System;
- ist eine Fesnel-Linse jede volumen- und massereduzierende Stufenlinse in Form einer optischen Baugruppe, die durch Beugung, Brechung oder Reflektion beziehungsweise allgemein durch Interferenz eine Fokussierung einer Lichtstrahlung bewirkt.

Die erfindungsgemäße Anordnung zur Erfassung von optischen Eigenschaften einer Probe einer zu untersuchenden Substanz umfasst:
- mindestens eine Lichtquelle, deren Lichtstrahl ganz oder teilweise auf die Probe gerichtet ist, wobei das Licht als Auf- oder Durchlicht ausgerichtet sein kann, und
- eine optische Sensoreinheit zur Aufnahme des von der Probe beeinflussten Auf- oder Durchlichtes, wobei
- die Probe unmittelbaren Kontakt zu einer ebenen Oberfläche eines beschichteten oder unbeschichteten Trägermaterials hat, die ganz oder teilweise als mindestens eine Fresnel-Linse ausgebildet ist, wobei das von der Probe beeinflusste Auf- oder Durchlicht durch die Fresnel-Linse zur optischen Sensoreinheit fokussiert ist.

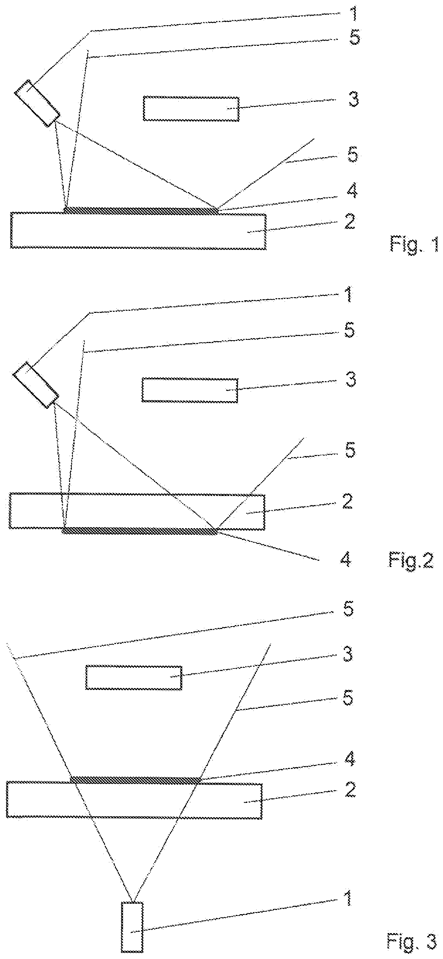

Hierbei kann der Teil der Oberfläche, die für die Probe zur Verfügung steht, eine Größenordnung von einem bis wenigen Quadratzentimetern erreichen. Aus einer großen Fläche resultiert jedoch ein großer Streubereich des vom Trägermaterial oder der Probe beeinflussten Lichtes, sofern kein optisches System zur Fokussierung verwendet wird. (Beispielhaft zeigen das die Figuren 1 bis 3).

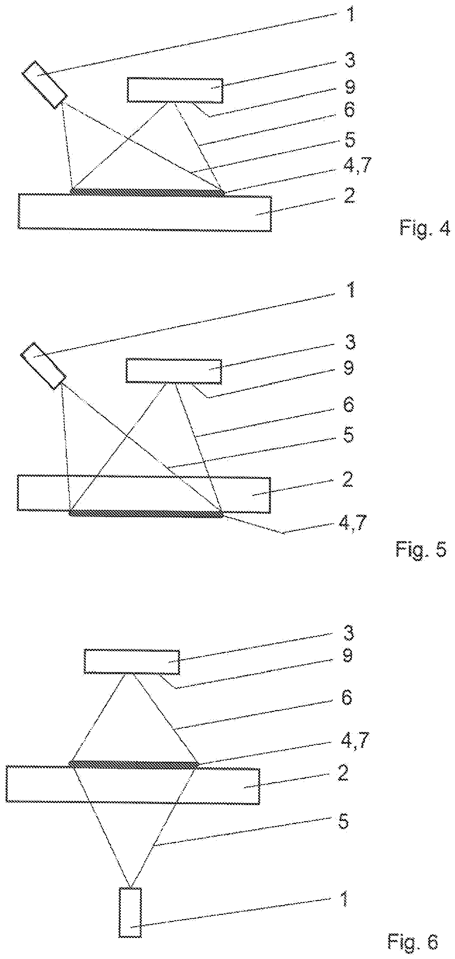

Eine Abbildung der gesamten Probenfläche auf die optische Sensoreinheit ist so nicht möglich. Deshalb umfasst die Erfindung eine Fresnel-Linse. Diese optische Struktur ist in der Oberfläche des Trägermaterials oder einer Beschichtung des Trägermaterials ausgebildet. Die Beschichtung ist ein Immobilisat. Durch die Fresnel-Linse wird das von der Probe beeinflusste Auf- oder Durchlicht zur optischen Sensoreinheit fokussiert. (Beispielhaft zeigen das die Figuren 4 bis 6).

Hiermit ist die Aufgabe, eine große Probenfläche ohne den Einsatz eines herkömmlichen optischen Systems, wie einer optischen Linse, zur Fokussierung des Lichtes bereitzustellen, erfüllt.

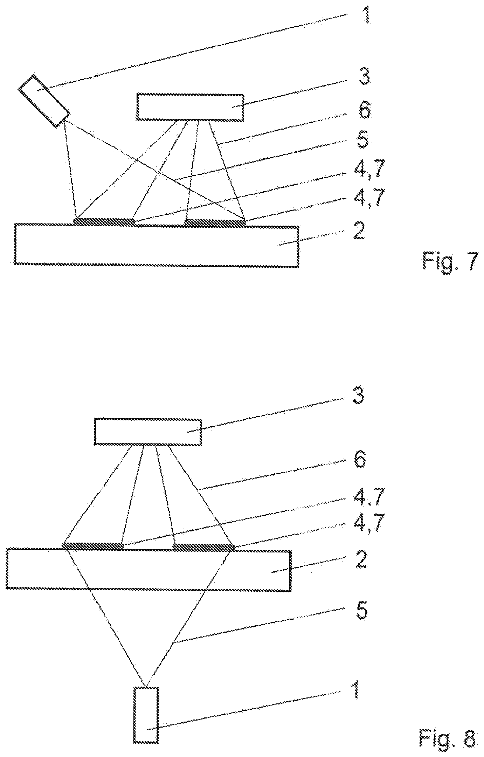

Die Oberfläche des Trägermaterials kann als eine Fresnel-Linse oder mehrere Fresnel-Linsen ausgebildet sein. Bei mehreren Linsen kann mit jeder Linse auf der optischen Sensoreinheit ein separater Bildpunkt fokussiert werden. Damit ist es möglich, die Probenfläche in mehrere separate Bereiche zu unterteilen und unabhängig voneinander zu untersuchen. Beispielhaft zeigen das die Figuren 7 und 8.

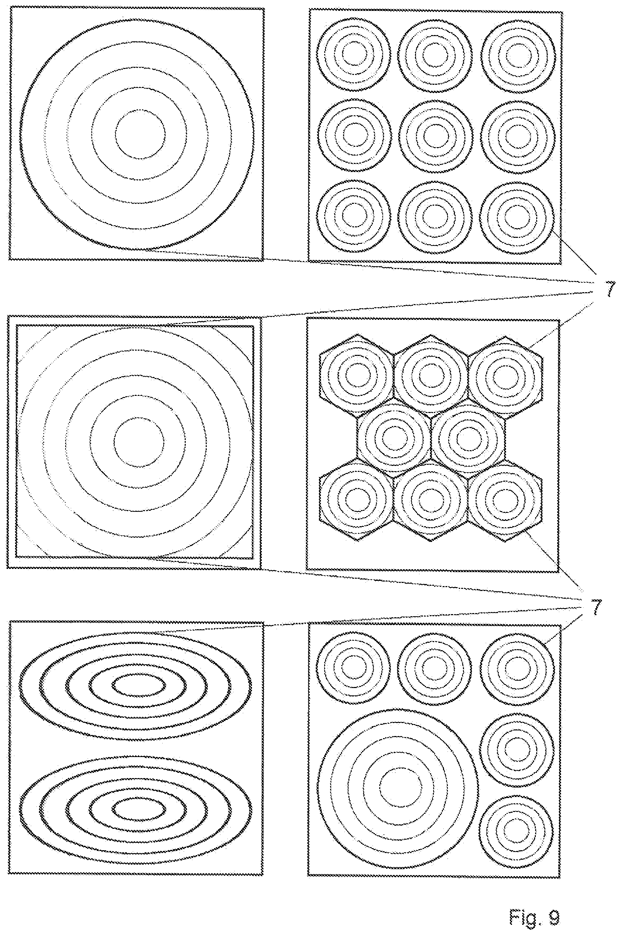

Die Fresnel-Linsen können verschiedene Formen, Größen und Anordnung aufweisen. Beispielhaft zeigt das die Figur 9.

Die Lichtquelle kann die Probe im Auflicht (beispielhaft Figuren 1, 2, 4, 5, 7) oder im Durchlicht (beispielhaft Figuren 3, 6, 8) beleuchten. Vorteilhaft, insbesondere für eine geringe Baugröße der Anordnung, ist eine Auflicht-Beleuchtung.

Die Proben und die Fresnellinse können sich auf der der Lichtquelle zugewandten Seite (beispielhaft Figuren 1, 3, 4, 6, 7, 8) oder auf der der Lichtquelle abgewandten Seite befinden (beispielhaft Figuren 2, 5).

Es können unterschiedliche Lichtquellen verwendet werden oder eine Lichtquelle, die unterschiedlich Licht mit unterschiedlichen Eigenschaften aussenden kann. Zu Beleuchtung der Probe kann jede Art von Licht verwendet werden, dass durch die optische Sensoreinheit aufgenommen und ausgewertet werden kann. Dazu gehören
- kohärentes und teilkohärentes Licht,
- Licht einer Farbe oder mehrerer diskreter Farben oder
- Licht eines Farbbereiches oder mehrerer kontinuierlicher Farbbereiche nacheinander.

Die Auswahl der Lichtquelle ist von der Zielstellung der Probenuntersuchung abhängig.

Für eine verzerrungsfreie Bild-Aufnahme durch die optische Sensoreinheit ist es vorteilhaft, dass die Ebene der Fresnel-Linse parallel zur Sensorfläche der optischen Sensoreinheit angeordnet ist.

Um die unterschiedliche Beugung, Brechung und Interferenz von Licht verschiedener Wellenlänge durch die Abbildung eines Spektrums sichtbar zu machen, ist eine Anordnung sinnvoll, bei der die Ebene der Fresnel-Linse in einem Winkel zwischen 30 und 120 Grad zur Sensorfläche der optischen Sensoreinheit angeordnet ist. Durch die Neigung der Sensorfläche gegenüber der Probenebene wird der geringe Abstand der unterschiedlichen Farben auf der Sensorfläche gestreckt und besser auswertbar.

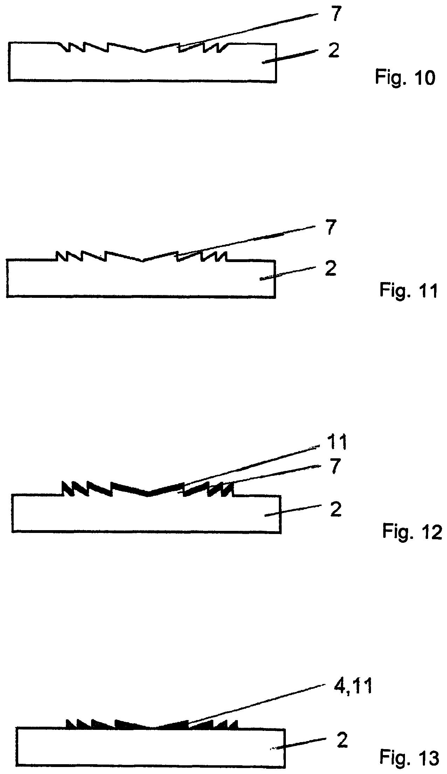

Die Fresnel-Linse kann unmittelbar auf (siehe Fig. 10) oder in (siehe Fig. 11) der Oberfläche des Trägermaterials ausgebildet sein. Damit ist die gewünschte Fokussierung des Lichtes realisiert.

Durch eine Beschichtung der Fresnel-Linse mit einem Immobilisat ist es möglich, bestimmte Stoffe auf der Fresnel-Linse zu konzentrieren, wodurch die optischen Eigenschaften der Fresnel-Linse, beispielsweise der Grad der Reflektion, der Beugung, der Brechung, die Transmission beziehungsweise allgemein das Interferenzverhalten, verändert werden.

Die Fläche der Fresnel-Linse kann ganz oder teilweise beschichtet sein siehe (Fig. 12). Sind mehrere Fresnel-Linsen ausgebildet, können alle oder auch nur einige der Linsen beschichtet sein und deren Flächen ganz oder teilweise beschichtet sein.

Die Fresnel-Linse kann auch durch eine Immobilisatschicht selbst ausgebildet sein (siehe Fig. 13). Dazu wird auf ein ebenes Trägermaterial ein Immobilisat aufgebracht, das als Fresnel-Linse geformt ist oder wird.

Zur gleichzeitigen Erkennung von unterschiedlichen Stoffen innerhalb einer Probe ist der gleichzeitige Einsatz von unterschiedlichen Immobilisaten sinnvoll. Die Beschichtung oder Ausbildung einer Fresnel-Linse oder mehrerer Fresnel-Linsen können
- aus einem Immobilisat für eine Fresnel-Linse oder
- aus einem Immobilisat für mehrere Fresnel-Linsen oder
- aus unterschiedlichen Immobilisaten für verschiedene Fresnel-Linsen oder
- aus unterschiedlichen Immobilisaten für verschiedenen Bereiche einer Fresnel-Linse oder mehrerer Fresnel-Linsen,
auch in beliebigen Kombinationen, bestehen, wobei ein Immobilisat auch ein Gemisch von Immobilisaten sein kann. (Das wird beispielhaft in Figur 12 dargestellt, wobei A bis R unterschiedliche Immobilisate symbolisieren und K+L sowie M+N+O Immobilisatgemische.)

Die Empfindlichkeit kann durch die Nutzung des vorbekannten Effektes der holographischen Verstärkung verbessert werden. Dazu ist zwischen der mindestens einen Fresnel-Linse und der optischen Sensoreinheit ein teildurchlässiger Spiegel angeordnet, wobei das Licht der Lichtquelle durch den teildurchlässigen Spiegel als Auflicht auf die Probe gerichtet ist und der am teildurchlässigen Spiegel reflektierte Anteil des Lichtes der Lichtquelle von der optischen Sensoreinheit aufnehmbar ist.

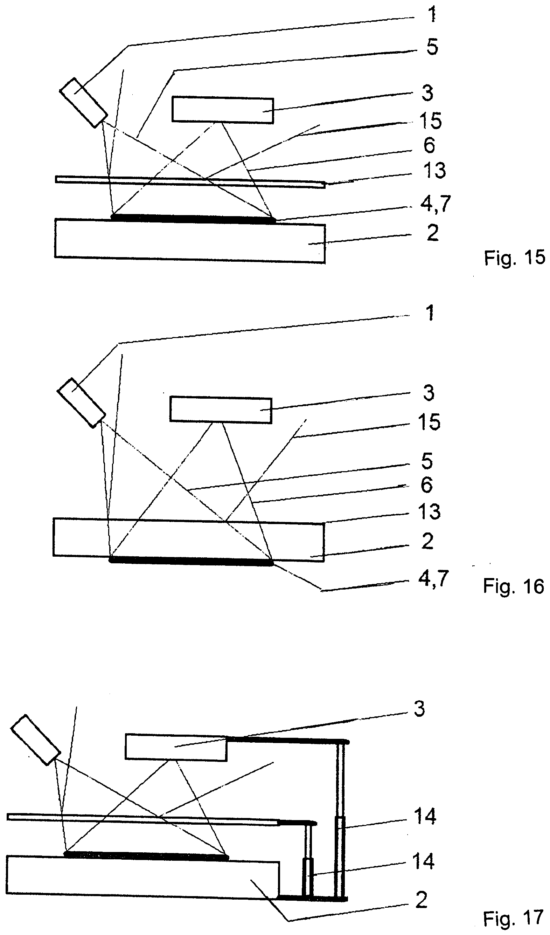

Der teildurchlässige Spiegel kann durch eine zusätzlich eingebrachte Fläche realisiert werden (siehe Fig. 15) oder durch die teilweise Verspiegelung des Trägermaterials der Fresnel-Linse auf der dieser gegenüberliegenden Seite (siehe Fig. 16). Beispielsweise können der teildurchlässige Spiegel nach Figur 15 und das Trägermaterial die Wände eines Probenkanals sein, der auch in Mikrofluidtechnologie ausgeführt sein kann.

Das vom teildurchlässigen Spiegel reflektierte Licht wirkt als ungestörte Welle beziehungsweise Referenzwelle zu dem von der Probe reflektierten Licht. Beide Teile interferieren und verstärken jedes Muster, was durch die Immobilisierung gebildet und vom Bildsensor ausgelesen wird.

Vorteilhaft ist die Ausstattung der Erfindung durch eine Möglichkeit, die Abstände zwischen
- dem Sensor und der Fresnel-Linse und/oder
- dem Sensor und dem teildurchlässigen Spiegel und/oder
- dem teildurchlässigen Spiegel und der Fresnel-Linse manuell oder mittels steuerbarer Stellglieder zu verändern.

Beispielsweise können Piezoaktoren als Stellglieder eingesetzt werden (siehe Fig. 17).

Für die Beeinflussung des Interferenzverhaltens sind Änderung dieser Abstände in der Größenordnung der Wellenlänge des Lichts der Lichtquelle bis zu einigen Millimetern sinnvoll, beispielsweise bis zu 10 mm.

Für die Beeinflussung der Größe des Bildpunktes des von der Probe kommenden fokussierten Lichtes an der optischen Sensoreinheit ist eine Änderung der Abstände in der Größenordnung des Gesamtaufbaus anwendbar, beispielsweise zwischen 10 mm bis zu 100 mm.

Eine Auswerteeinheit
- ist mit der optischen Sensoreinheit informationsleitend verbunden und
- kann mit anderen Teilen der erfindungsgemäßen Anordnung informationsleitend verbunden sein und/oder
- kann mit weiteren Teilen und Geräten außerhalb der erfindungsgemäßen Anordnung informationsleitend verbunden sein.

Die informationsleidende Verbindung zwischen Auswerteeinheit und der optischen Sensoreinheit dient der Übernahme der Sensordaten. Sie kann aber auch zur Steuerung der optischen Sensoreinheit durch die Auswerteeinheit dienen.

Vorteilhaft sind informationsleitende Verbindungen zwischen der Auswerteeinheit und
- der Lichtquelle und/oder
- eventuell vorhandenen Stellgliedern für eine Änderung der Abstände zwischen optischem Sensor, teildurchlässigem Spiegel und/oder Fresnel-Linse und/oder
- einem eventuell mit der erfindungsgemäßen Anordnung verbundener Flusssteuerbaustein zur Überwachung, Steuerung und Aufbereitung der Probenzufuhr und/oder
- eventuell vorhandenen Sensoren für die Erfassung von Auslöseereignissen für die Bildübertragung vom optischen Sensor zur Auswerteeinheit.

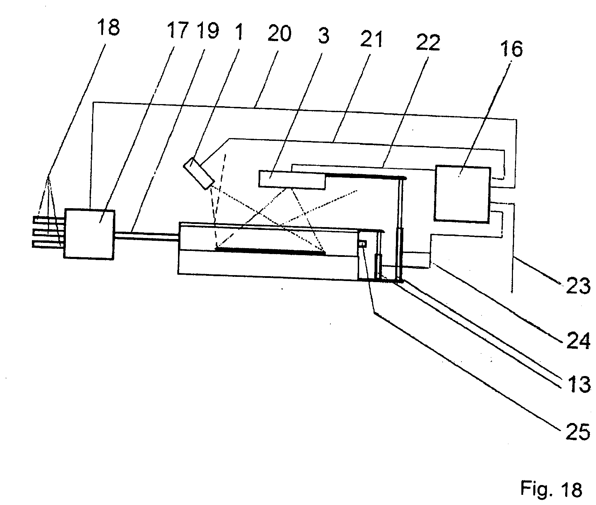

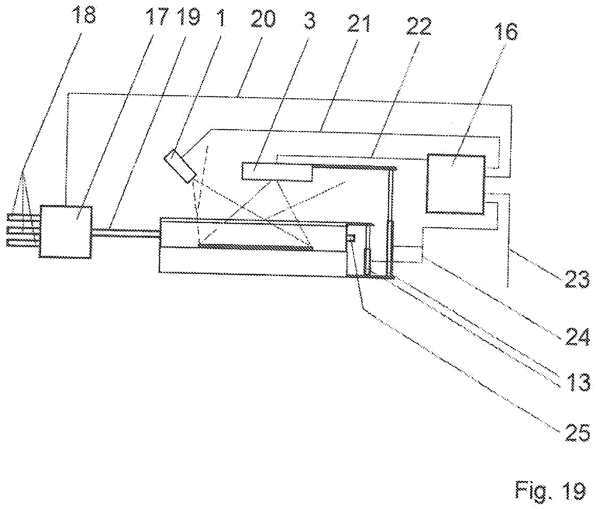

Vorteilhaft ist eine informationsleitende Verbindungen zwischen der Auswerteeinheit und außerhalb der erfindungsgemäßen Anordnung befindlichen Geräten und System, um einerseits in der erfindungsgemäßen Anordnung gewonnene Daten weiter zu verarbeiten und andererseits die erfindungsgemäße Anordnung von außen steuern zu können (siehe Fig. 18).

Die Daten optischen Sensoreinheit werden in der Auswerteeinheit übertragen und dort verarbeitet. Sie können als Bilder und andere Abbildungen interpretiert werden.

Die Übernahme der Daten von der optischen Sensoreinheit kann als Einzelbild, Serienbilder oder Video erfolgen.

Die Übernahme kann Daten kann durch eine manuelle Handlung und/oder automatisch durch eine Zeitsteuerung und/oder ein Ereignis, dass durch die Auswertung von Sensordaten eintritt, ausgelöst werden.

Als Sensoren können Sensoren zur Erfassung von Beschleunigung, Temperatur, Druck, Stoff-Konzentration und anderen Größen, die auf die Probe und/oder die erfindungsgemäße Anordnung wirken, eingesetzt werden.

Auslösende Ereignisse sind die Über- oder Unterschreitung von Sensorwerten, beispielsweise die Unterschreitung einer bestimmten Sauerstoffkonzentration in einem Blutserum.

Die Auswerteeinheit kann so beschaffen sein, dass sie Geräteparameter der erfindungsgemäßen Anordnung und eventuell weiterer angeschlossener Anordnungen steuert. Möglich sein kann die Steuerung:
- der Lichtquelle (Ein- und Aus schallten, Helligkeit, Änderung der Lichtquelle von Normal- zu kohärentem Licht),
- der eventuell vorhandenen Stellglieder zur Änderung der Abstände innerhalb der erfindungsgemäßen Anordnung und/oder
- eines eventuell mit der erfindungsgemäßen Anordnung verbundenen Flusssteuerbausteins zu Steuerung und Aufbereitung der Probenzufuhr.

Dadurch wird eine rekursive Parametrisierung im Sinne einer automatischen Optimierung des Betriebes der erfindungsgemäßen Anordnung in einem Gesamtsystem (siehe Fig. 18) erreicht. Stellt die Auswerteeinheit beispielsweise fest, dass die Ausleuchtung der Proben zu gering ist, so kann die Helligkeit der Lichtquelle erhöht werden. Oder stellt die Auswerteeinheit beispielsweise fest, dass die Konzentration eines Stoffes in der zu untersuchenden Probe zu gering ist, um eine markante Veränderung am Immobilisat zu erkennen, so kann die Zugabe eines Lösungsmittels zur Probe im Flusssteuerbaustein verringert werden.

Somit ergibt sich ein Verfahren zur Erfassung von optischen Eigenschaften einer Probe eines zu untersuchenden Materials, bei dem die Probe der als Fresnel-Linse ausgeführten Oberfläche einer Anordnung und die Sensorwerte der optische Sensoreinheit der Auswerteeinheit zugeführt wird, wobei die Probenzuführung als auch die Übertragung der Sensorwerte jeweils
- kontinuierlich oder
- zeitgesteuert oder
- manuell ausgelöst oder
- sensor- und/oder ereignisgesteuert
erfolgt, wobei die Sensorwerte der optischen Sensoreinheit als mikroskopische Bilder und/oder holografisch verstärkte Aufnahmen ausgewertet werden.

Insbesondere die holographische Verstärkung erreicht Werte mehrerer Zehnerpotenzen, so dass aus dem von einer mikroskopischen Struktur beeinflussten Licht ein verstärktes Signal mit einer flächenhaften Belegung entsteht, so dass man ein makroskopisches Signal auf der optischen Sensoreinheit erhält.

Es werden neben der Lichtquelle (beispielsweise Laserdiode) und der optischen Sensoreinheit (Bildsensor) keine zusätzlichen herkömmlichen optischen Bauteile benötigt. Damit ist eine sehr kompakte Diagnoseeinheit aufbaubar.

Durch den gleichzeitigen Einsatz von unterschiedlichen Immobilisatoren können unterschiedliche atomare und/oder molekulare Bestandteile in einer Probe gleichzeitig detektiert werden. Beispielsweise können gleichzeitig unterschiedliche RNA, DNA, Peptide und/oder Proteine nachgewiesen werden, wodurch beispielsweise die Detektion multiresistenter Keime unterstützt werden kann.

Die Ergebnisse der Auswertung der Informationen der optischen Sensoreinheit können unmittelbar auf die Parameter der erfindungsgemäßen Anordnung und des erfindungsgemäßen Verfahrens rückwirken (rekursive Parametrisierung).

Die erfindungsgemäße Anordnung und das erfindungsgemäße Verfahren ermöglichen die Abbildung und das Erkennen von:
- Oberflächenstrukturen und optisch bestimmbaren Materialeigenschaften,
- atomaren und/oder molekularen Bestandteilen in festen, flüssigen oder gasförmigen Proben mit und ohne Einsatz von Immobilisatoren,
- Veränderungen in einer Probe durch physikalisch-chemischbiologische Reaktionen,
sowie
- die selektive Detektion von An- oder Einlagerungen mindestens einer spezifischen Biomolekülspezies (DNA, RNA, Peptiden, Proteine, wie Antigene oder Antikörper in oder an mindestens einer dünnen Schicht zu Zwecken der Diagnose, wobei die Empfindlichkeit in einer Weise erhöht ist, die das Verfahren unter Verwendung der Anordnung auch außerhalb von Labors genügend robust und massentauglich macht, wobei eine Markierung der spezifischen Biomoleküle, beispielsweise durch fluoreszierende Marker oder Nanopartikel, nicht notwendig ist.

Die Erfindung wird nachstehend an Hand der Ausführungsbeispiele und der Figuren näher erläutert, ohne auf diese beschränkt zu werden.

Es zeigen:
Fig. 1: eine schematische Darstellung eine erste Ausführungsform einer Anordnung zur Untersuchung einer Probe im Auflicht ohne optische Fokussierung,
Fig. 2: eine schematische Darstellung eine zweite Ausführungsform einer Anordnung zur Untersuchung einer Probe im Auflicht ohne optische Fokussierung,
Fig. 3: eine schematische Darstellung eine dritte Ausführungsform einer Anordnung zur Untersuchung einer Probe im Durchlicht ohne optische Fokussierung,
Fig. 4: eine schematische Darstellung eine erste Ausführungsform einer erfindungsgemäßen Anordnung zur Untersuchung einer Probe im Auflicht mit einer optischen Fokussierung durch eine Fresnel-Linse,
Fig. 5: eine schematische Darstellung eine zweite Ausführungsform einer erfindungsgemäßen Anordnung zur Untersuchung einer Probe im Auflicht mit einer optischen Fokussierung durch eine Fresnel-Linse,
Fig. 6: eine schematische Darstellung eine dritte Ausführungsform einer erfindungsgemäßen Anordnung zur Untersuchung einer Probe im Durchlicht mit einer optischen Fokussierung durch eine Fresnel-Linse,
Fig. 7: eine schematische Darstellung einer vierten Ausführungsform einer erfindungsgemäßen Anordnung zur gleichzeitigen Untersuchung mehrere Proben im Auflicht,
Fig. 8: eine schematische Darstellung einer fünften Ausführungsform einer erfindungsgemäßen Anordnung zur gleichzeitigen Untersuchung mehrere Proben im Durchlicht,
Fig. 9: eine schematische Darstellung verschiedener Formen und Anordnungen von Fresnel-Linsen auf einem Trägermaterial,
Fig. 10: eine schematische Darstellung einer ersten Ausführungsform der Fresnel-Linse der erfindungsgemäßen Anordnung, die im Trägermaterial ausgebildet ist,
Fig. 11: eine schematische Darstellung einer zweiten Ausführungsform der Fresnel-Linse der erfindungsgemäßen Anordnung, die auf dem Trägermaterial ausgebildet ist,
Fig. 12: eine schematische Darstellung einer dritten Ausführungsform der Fresnel-Linse der erfindungsgemäßen Anordnung, die auf Trägermaterial ausgebildet und mit einem Immobilisat beschichtet ist,
Fig. 13: eine schematische Darstellung einer vierten Ausführungsform der Fresnel-Linse der erfindungsgemäßen Anordnung, die aus einem Immobilisat ausgebildet ist,

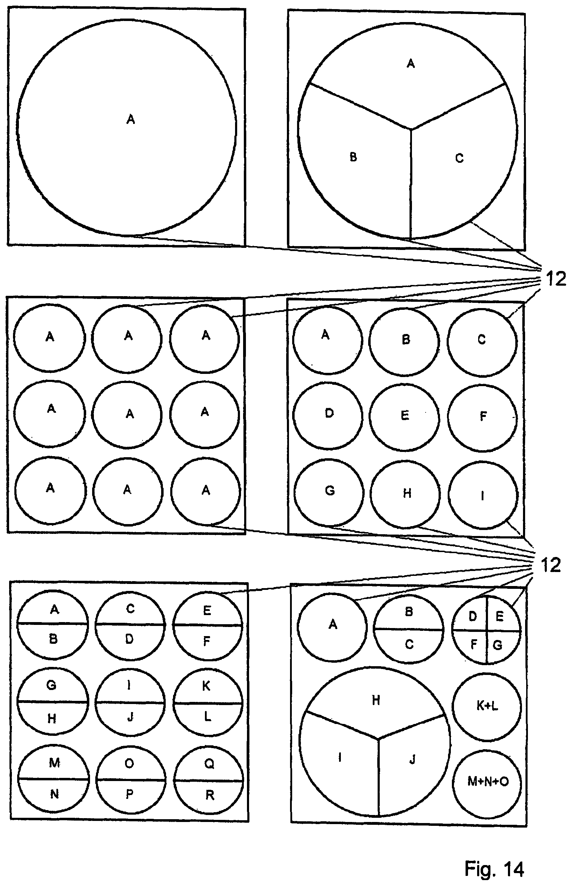

Fig. 14: eine schematische Darstellung verschiedener beispielhafter Verteilungen und Anordnungen von Immobilisaten auf den Fresnel-Linsen auf einem Trägermaterial,
Fig. 15: eine schematische Darstellung einer siebenden Ausführungsform der erfindungsgemäßen Anordnung, die einen teildurchlässigen Spiegel umfasst,
Fig. 16: eine schematische Darstellung einer achten Ausführungsform der erfindungsgemäßen Anordnung, die einen teildurchlässigen Spiegel umfasst, der sich auf der der Fresnel-Linse gegenüberliegenden Oberfläche befindet,
Fig. 17: eine schematische Darstellung einer neunten Ausführungsform der erfindungsgemäßen Anordnung, die Stellglieder umfasst, mit deren Hilfe die Abstände zwischen der optischen Sensoreinheit, dem teildurchlässigen Spiegel und der Fresnel-Linse veränderbar sind, und
Fig. 18: eine schematische Darstellung einer zehnten Ausführungsform der erfindungsgemäßen Anordnung in einem System zum Zusammenwirken mit einem Flusssteuerbaustein.

Die erfindungsgemäße Anordnung zur Erfassung von optischen Eigenschaften einer Probe einer zu untersuchenden Substanz umfasst, wie in den Figuren 4 bis 6 dargestellt,
- mindestens eine Lichtquelle (1), deren Lichtstrahl ganz oder teilweise auf die Probe (4) gerichtet ist, wobei das Licht als Auf- oder Durchlicht ausgerichtet sein kann, und
- eine optische Sensoreinheit (3) zur Aufnahme des von der Probe (4) beeinflussten Auf- oder Durchlichtes, wobei
- die Probe (4) unmittelbaren Kontakt zu einer ebenen Oberfläche eines beschichteten oder unbeschichteten Trägermaterials (2) hat, die ganz oder teilweise als mindestens eine Fresnel-Linse (7) ausgebildet ist, wobei das von der Probe (4) beeinflusste Auf- oder Durchlicht durch die Fresnel-Linse (7) zur optischen Sensoreinheit (3) fokussiert ist.

Hierbei kann der Teil der Oberfläche, die für die Probe (4) zur Verfügung steht, eine Größenordnung von einem bis wenigen Quadratzentimetern erreichen. Aus einer großen Fläche resultiert jedoch ein großer Streubereich des vom Trägermaterial (2) oder der Probe (4) beeinflussten Lichtes (6), sofern kein optisches System zur Fokussierung verwendet wird. (Beispielhaft zeigen das die Figuren 1 bis 3.)

Eine Abbildung der gesamten Probenfläche auf die optische Sensoreinheit (3) ist so nicht möglich. Deshalb umfasst die Erfindung mindestens eine Fresnel-Linse (7). Diese optische Struktur ist in der Oberfläche des Trägermaterials (2) oder einer Beschichtung des Trägermaterials (2) ausgebildet. Diese Beschichtung ist ein Immobilisat (11) (siehe Fig. 12). Durch die Fresnel-Linse (7) wird das von der Probe (4) beeinflusste Auf- oder Durchlicht (6) zur optischen Sensoreinheit (3) fokussiert. (Beispielhaft zeigen das die Figuren 4 bis 6.)

Hiermit ist die Aufgabe, eine große Probenfläche ohne den Einsatz eines herkömmlichen optischen Systems, wie einer optischen Linse, zur Fokussierung des Lichtes bereitzustellen, erfüllt.

Die Oberfläche des Trägermaterials (2) kann als eine Fresnel-Linse (7) oder mehrere Fresnel-Linsen (7) ausgebildet sein. Bei mehreren Linsen kann mit jeder Linse auf der optischen Sensoreinheit ein separater Bildpunkt fokussiert werden. Damit ist es möglich, die Probenfläche in mehrere separate Bereiche zu unterteilen und unabhängig voneinander zu untersuchen. (Beispielhaft zeigen das die Figuren 7 und 8.)

Die Fresnel-Linse (7) kann verschiedene Formen, Größen und Anordnung aufweisen. (Beispielhaft zeigt das die Figur 9.)

Die Lichtquelle (1) kann die Probe (4) im Auflicht (beispielhaft Figuren 4, 5 und 7) oder im Durchlicht (beispielhaft Figuren 6 und 8) beleuchten. Vorteilhaft insbesondere für eine geringe Baugröße der Anordnung ist eine Auflicht-Beleuchtung.

Die Probe (4) und die Fresnellinse (7) können sich auf der der Lichtquelle (1) zugewandten Seite (beispielhaft Figuren 4, 6, 7 und 8) oder auf der der Lichtquelle (1) abgewandten Seite des Trägermaterials (2) befinden (beispielhaft Figur 5).

Es können unterschiedliche Lichtquellen (1) verwendet werden oder eine Lichtquelle (1), die unterschiedliches Licht mit unterschiedlichen Eigenschaften aussenden kann. Zu Beleuchtung der Probe (4) kann jede Art von Licht (5) verwendet werden, dass durch die optische Sensoreinheit (3) aufgenommen und ausgewertet werden kann. Dazu gehören:
- kohärentes oder teilkohärentes Licht,
- Licht einer Farbe oder mehrerer diskreten Farben oder
- Licht eines Farbbereiches oder mehrerer kontinuierlichen Farbbereiche nacheinander.

Die Auswahl der Lichtquelle ist von der Zielstellung der Probenuntersuchung abhängig. So kann beispielsweise kohärentes Licht, einer Laserdiode mit einer Wellenlänger von 635 nm verwendet werden.

Für eine verzerrungsfreie Bild-Aufnahme durch optische Sensoreinheit (3) ist es vorteilhaft, dass die Ebene der Fresnel-Linse (7) parallel zur Sensorfläche der optischen Sensoreinheit angeordnet ist (beispielhaft Figuren 4, 5, 6).

Die Fresnel-Linse (7) kann unmittelbar auf (siehe Fig. 10) oder in (siehe Fig. 11) der Oberfläche des Trägermaterials (2) ausgebildet sein. Damit ist die gewünschte Fokussierung des Lichtes realisiert.

Durch eine Beschichtung der Fresnel-Linse (7) mit einem Immobilisat (11) ist es möglich, bestimmte Stoffe auf der Fresnel-Linse (7) zu konzentrieren, wodurch die optischen Eigenschaften der Fresnel-Linse (7), beispielsweise der Grad bzw. die Intensität der Reflektion, der Beugung, der Brechung, die Transmission beziehungsweise allgemein das Interferenzverhalten, verändert werden.

Die Fläche der Fresnel-Linse (7) kann ganz oder teilweise beschichtet sein (siehe Fig. 12). Sind mehrere Fresnel-Linsen (7) ausgebildet, können alle oder auch nur einige der Frasnel-Linsen (7) beschichtet sein und deren Flächen ganz oder teilweise beschichtet sein.

Die Fresnel-Linse (7) kann auch durch eine Immobilisatschicht selbst ausgebildet sein (siehe Fig. 13). Dazu wird auf ein ebenes Trägermaterial ein Immobilisat (11) aufgebracht, das als Fresnel-Linse (7) geformt ist oder wird.

Zur gleichzeitigen Erkennung von unterschiedlichen Stoffen innerhalb einer Probe (4) ist der gleichzeitige Einsatz von unterschiedlichen Immobilisaten (11) sinnvoll. Die Beschichtung oder Ausbildung einer Fresnel-Linse (7) oder mehrerer Fresnel-Linsen (7) können
- aus einem Immobilisat (11) für eine Fresnel-Linse (7) oder
- aus einem Immobilisat (11) für mehrere Fresnel-Linsen (7) oder
- aus unterschiedlichen Immobilisaten (11) für verschiedene Fresnel-Linsen (7) oder
- aus unterschiedlichen Immobilisaten (11) für verschiedenen Bereiche einer Fresnel-Linse (7) oder mehrerer Fresnel-Linsen (7),
auch in beliebigen Kombinationen, bestehen, wobei ein Immobilisat (11) auch ein Gemisch von Immobilisaten (11) sein kann. Das wird beispielhaft in Figur 14 dargestellt, wobei A bis R unterschiedliche Immobilisate (11) symbolisieren und K+L sowie M+N+O Immobilisatgemische.

Die Empfindlichkeit kann durch die Nutzung des vorbekannten Effektes der holographischen Verstärkung verbessert werden. Dazu ist zwischen der mindestens einen Fresnel-Linse (7) und der optischen Sensoreinheit (2) ein teildurchlässiger Spiegel (13) angeordnet (siehe Figuren 15 und16), wobei das Licht (5) der Lichtquelle (1) durch den teildurchlässigen Spiegel (13) als Auflicht auf die Probe (4) gerichtet ist und der am teildurchlässigen Spiegel reflektierte Anteil des Lichtes der Lichtquelle (15) von der optischen Sensoreinheit (3) aufnehmbar ist.

Der teildurchlässige Spiegel (13) kann durch eine zusätzlich eingebrachte Fläche realisiert werden (siehe Fig. 15) oder durch die teilweise Verspiegelung des Trägermaterials (2) der Fresnel-Linse (7) auf der dieser gegenüberliegenden Seite (siehe Fig. 16). Beispielsweise können der teildurchlässige Spiegel (13) nach Figur 15 und das Trägermaterial (2) die Wände eines Probenkanals sein, der auch in Mikrofluidtechnologie ausgeführt sein kann, oder die Wandung eines Behälters sein, in dem sich die Probe (4) befindet.

Das vom teildurchlässigen Spiegel (13) reflektierte Licht wirkt als ungestörte Welle beziehungsweise Referenzwelle (15) zu dem von der Probe reflektierten Licht (6). Beide Teile interferieren und verstärken jedes Muster, was durch die Immobilisierung gebildet und von der optischen Sensoreinheit (3) ausgelesen wird.

Vorteilhaft ist die Ausstattung der Erfindung durch eine Möglichkeit, die Abstände zwischen
- der Sensorfläche (9) und der Fresnel-Linse (7) und/oder
- der Sensorfläche (9) und dem teildurchlässigen Spiegel (13) und/oder
- dem teildurchlässigen Spiegel (13) und der Fresnel-Linse (7)
manuell oder mittels steuerbarer Stellglieder (14) zu verändern.

Beispielsweise können Piezoaktoren als Stellglieder (14) eingesetzt werden (siehe Fig. 17).

Für die Beeinflussung des Interferenzverhaltens sind Änderung dieser Abstände in der Größenordnung der Wellenlänge des Lichts der Lichtquelle bis zu einigen Millimetern sinnvoll, beispielsweise bis zu 10mm. Für die Beeinflussung der Größe des Bildpunktes des von der Probe (4) kommenden fokussierten Lichtes (6) an der optischen Sensoreinheit (3) ist eine Änderung der Abstände in der Größenordnung des Gesamtaufbaus anwendbar, beispielsweise zwischen 10 mm bis zu 100 mm.

Die erfindungsgemäße Anordnung kann in ein Gesamtsystem wie folgt integriert sein:
Eine Auswerteeinheit (16)
- ist mit der optischen Sensoreinheit (3) informationsleitend verbunden (22) und
- kann mit anderen Teilen (1, 3) der erfindungsgemäßen Anordnung informationsleitend verbunden (21, 24) sein und/oder
- kann mit weiteren Teilen und Geräten außerhalb der erfindungsgemäßen Anordnung, wie bspw. der Auswerteeinheit (16) oder dem Flussbaustein (17) informationsleitend verbunden (20, 23) sein.

Die informationsleidende Verbindung zwischen Auswerteeinheit (16) und der optischen Sensoreinheit (22) dient der Übernahme der Sensordaten von der optischen Sensoreinheit (3) zur Auswerteeinheit (16). Sie kann aber auch zur Steuerung der optischen Sensoreinheit (3) durch die Auswerteeinheit (16) dienen.

Vorteilhaft sind informationsleitende Verbindungen zwischen der Auswerteeinheit und
- der Lichtquelle (1) (21) und/oder
- Stellgliedern (14) für eine Änderung der Abstände zwischen optischem Sensor (3), teildurchlässigem Spiegel (13) und/oder Fresnel-Linse (7) (24) und/oder
- einem mit der erfindungsgemäßen Anordnung verbundener Flusssteuerbaustein (17) zur Überwachung, Steuerung und Aufbereitung der Probenzufuhr (20) und/oder
- Sensoren für die Erfassung von Auslöseereignissen für die Bildübertragung vom optischen Sensor (3) zur Auswerteeinheit (16).

Vorteilhaft ist eine informationsleitende Verbindungen zwischen der Auswerteeinheit (16) und außerhalb der erfindungsgemäßen Anordnung befindlichen Geräten und Systemen (23), beispielsweise dem Internet, um einerseits in der erfindungsgemäßen Anordnung gewonnene Daten weiter zu verarbeiten und andererseits die erfindungsgemäße Anordnung von außen steuern zu können.

Die Daten der optischen Sensoreinheit (3) werden in der Auswerteeinheit (16) übertragen und dort verarbeitet.

Die Übernahme der Daten von der optischen Sensoreinheit kann als Einzelbild, Serienbilder oder Video erfolgen.

Die Übernahme der Daten kann durch eine manuelle Handlung oder automatisch durch eine Zeitsteuerung oder ein Ereignis, dass durch die Auswertung von Sensordaten eintritt, ausgelöst werden. Als Sensoren können dabei Sensoren zur Erfassung von Beschleunigung, Temperatur, Druck, Stoff-Konzentration und anderen Größen, die auf die Probe und/oder die erfindungsgemäße Anordnung wirken, eingesetzt werden. Auslösende Ereignisse sind die Über- oder Unterschreitung von Sensorwerten, beispielsweise die Unterschreitung einer bestimmten Sauerstoffkonzentration in einem Blutserum.

Die Auswerteeinheit (16) kann so beschaffen sein, dass sie Geräteparameter der erfindungsgemäßen Anordnung und eventuell weiterer angeschlossener Anordnungen steuert. Möglich sein kann die Steuerung
- der Lichtquelle (1) (Ein- und Ausschallten, Helligkeit, Änderung der Lichtquelle von Normal- zu kohärentem Licht),
- der vorhandenen Stellglieder (14) zur Änderung der Abstände innerhalb der erfindungsgemäßen Anordnung und/oder
- eines mit der erfindungsgemäßen Anordnung verbundenen Flusssteuerbausteins (17) zu Steuerung und Aufbereitung der Probenzufuhr.

Dadurch wird eine rekursive Parametrisierung im Sinne einer automatischen Optimierung des Betriebes der erfindungsgemäßen Anordnung erreicht. Stellt die Auswerteeinheit (16) beispielsweise fest, dass die Ausleuchtung der Proben (4) zu gering ist, so kann die Helligkeit der Lichtquelle (1) erhöht werden. Oder stellt die Auswerteeinheit (16) beispielsweise fest, dass die Konzentration eines Stoffes in der zu untersuchenden Probe (4) zu gering ist, um eine markante Veränderung am Immobilisat zu erkennen, so kann die Zugabe eines Lösungsmittels zur Probe (4) im Flusssteuerbaustein (17) verringert werden.

Bei einem Verfahren zur Erfassung von optischen Eigenschaften einer Probe (4) eines zu untersuchenden Materials, bei dem die Probe (4) der als Fresnel-Linse (7) ausgeführten Oberfläche eines Trägermaterials (2) einer Anordnung und die Sensorwerte der optische Sensoreinheit der Auswerteeinheit zugeführt werden, kann die Probenzuführung als auch die Übertragung der Sensorwerte jeweils kontinuierlich oder zeitgesteuert oder manuell ausgelöst oder sensor- und/oder ereignisgesteuert erfolgt, wobei die Sensorwerte der optische Sensoreinheit (3) als mikroskopische Bilder und/oder holografisch verstärkte Aufnahmen ausgewertet werden.

Insbesondere die holographische Verstärkung erreicht Werte vieler Zehnerpotenzen, so dass aus dem von einer mikroskopischen Struktur beeinflussten Licht ein verstärktes Signal mit einer flächenhaften Belegung entsteht, so dass man ein makroskopisches Signal auf der optischen Sensoreinheit (3) erhält. Es werden neben der Lichtquelle (beispielsweise Laserdiode) und der optischen Sensoreinheit (Bildsensor) keine zusätzlichen herkömmlichen optischen Bauteile benötigt. Damit ist eine sehr kompakte Diagnoseeinheit aufbaubar.

Durch den gleichzeitigen Einsatz von unterschiedlichen Immobilisatoren können unterschiedliche atomare und/oder molekulare Bestandteile in einer Probe gleichzeitig detektiert werden. Beispielsweise können gleichzeitig unterschiedliche RNA, DNA, Peptide und/oder Proteine nachgewiesen werden, wodurch beispielsweise die Detektion multiresistenter Keime in der medizinischen unterstützt werden kann.

Die Ergebnisse der Auswertung der Informationen der optischen Sensoreinheit können unmittelbar auf die Parameter der erfindungsgemäßen Anordnung und des erfindungsgemäßen Verfahrens rückwirken (rekursive Parametrisierung).

Die erfindungsgemäße Anordnung und das erfindungsgemäße Verfahren ermöglichen die Abbildung und das Erkennen von:
- Oberflächenstrukturen und optisch bestimmbaren Materialeigenschaften,
- atomaren und/oder molekularen Bestandteilen in festen, flüssigen oder gasförmigen Proben mit und ohne Einsatz von Immobilistoren,
- Veränderungen in einer Probe durch physikalisch-chemischbiologische Reaktionen,
sowie
- die selektive Detektion von An- oder Einlagerungen mindestens einer spezifischen Biomolekülspezies (DNA, RNA, Proteine, wie Antigene oder Antikörper) in oder an mindestens einer dünnen Schicht zu Zwecken der Diagnose, wobei die Empfindlichkeit in einer Weise erhöht ist, die das Verfahren unter Verwendung der Anordnung auch außerhalb von Labors genügend robust und massentauglich macht, wobei eine Markierung der spezifischen Biomoleküle, beispielsweise durch fluoreszierende Marker oder Nanopartikel, nicht notwendig ist.

Für medizinische Zwecke kommen gemäß dem Stand der Technik bisher molekulare oder serologische Verfahren zur Anwendung, welche den Nachteil haben, dass immer eine Markierung für die Detektion der medizinisch relevanten Zielmoleküle erforderlich ist.

Die mit der vorliegenden Anordnung und dem dazu gehörigen Verfahren auszulesenden Moleküleinzellagen auf diffraktiver optischer Struktur (= planares Substrat mit einer mikrostrukturierten, immobilisierten Monolagenschicht aus Fängermolekülen) erfordern demgegenüber keine zusätzlichen Marker, was zu einer markierungsfreie Detektion führt.

Dies ist insbesondere bei der Verwendung der Anordnung und des Verfahrens zur Untersuchung spezifischer, bimolekularer Wechselwirkungen von Biomolekülen (wie RNA, DNA Peptiden und Proteinen) ohne zusätzlichen Marker von sehr großer Bedeutung, welche wie folgt durchgeführt wird:
Das Licht wird am Trägersubstrat reflektiert und durch die Fängermoleküle gebeugt. Es entsteht dadurch und durch eine konstruktive, destruktive Interferenz ein strukturiertes Bild auf dem Bildsensor (Hologramm).

Bei Anlagerung der Zielmoleküle an die Fängermoleküle nimmt der Anteil des gebeugten Lichtes zu und es entsteht durch die konstruktive, destruktive Interferenz eine veränderte Bildstruktur auf dem Bildsensor. Diese Bildstrukturänderung (Musteränderung) lässt Rückschlüsse auf die Zielmoleküle zu (bspw. deren Konzentration). Mit anderen Worten ausgedrückt, die Belegung der Fängermoleküle mit den Zielmolekülen verändert das Hologramm.

Dabei wird keine abbildende Optik benötigt, vielmehr kommen bei der erfindungsgemäßen Anordnung und dem erfindungsgemäßen Verfahren die auf dem planaren Trägersubstrat mit einer mikrostrukturierten, immobilisierten Monolagenschicht ausgebildeten Fängermoleküle als binäre Fresnel-Linse zum Einsatz, wobei die entstehenden Hologramme direkt ausgewertet werden (in dem sie bspw. mit vorbekannten Hologrammen einer Datenbank verglichen werden).

Durch dieses holographische Auslesen der Molekül-Monolagen mit den bindenden Zielmolekülen wird die spezifische, bimolekulare Wechselwirkung von Biomolekülen (wie RNA, DNA Peptiden und Proteinen) ohne zusätzlichen Marker ermittelt.

Dadurch ist unter Verwendung von RNA, DNA, Peptiden und Proteinen auf den funktionalisierten Oberflächen als Moleküleinzellagen eine diffraktiver optischer Struktur generiert, welche ein optischholographisches, markierungsfreies Auslesen zur selektiven, spezifischen und hochsensitiven Multiparameter-Analyse für medizinische Zwecke möglich.

### Bezugszeichenliste

- 1 -: Lichtquelle
- 2 -: Trägermaterial
- 3 -: optischer Sensoreinheit
- 4 -: Probe
- 5 -: Lichtstrahl
- 6 -: von der Probe beeinflusstes Auf- oder Durchlicht (Objektwelle)
- 7 -: Frasnel-Linse
- 8 -: Ebene der Fresnel-Linse
- 9 -: Sensorfläche
- 10 -: Winkel zwischen Ebene der Fresnel-Linse (8) und Sensorfläche (9)
- 11 -: Immobilisat
- 12 -: Bereich einer Fresnel-Linse
- 13 -: teildurchlässiger Spiegel
- 14 -: Stellglied
- 15 -: am teildurchlässigen Spiegel reflektierter Anteil des Lichtes der Lichtquelle (Referenzwelle)
- 16 -: Auswerteeinheit
- 17 -: Flusssteuerbaustein
- 18 -: Zugang für Probenmaterial und Hilfsstoffen
- 19 -: Verbindung vom Flusssteuerbaustein zur erfindungsgemäßen Anordnung
- 20 -: informationsleitende Verbindung zwischen Auswerteeinheit und Flusssteuerbausteins
- 21 -: informationsleitende Verbindung zwischen Auswerteeinheit und Lichtquelle
- 22 -: informationsleitende Verbindung zwischen Auswerteeinheit und optischer Sensoreinheit
- 23 -: informationsleitende Verbindung zwischen Auswerteeinheit und weiteren Geräten und/oder dem Internet
- 24 -: informationsleitende Verbindung zwischen Auswerteeinheit und einem oder mehreren Stellgliedern
- 25 -: Ausgang für Probenmaterial

- A,B,C,D,E,F,G,H,J,K,L,M,N,O,Q.R -: unterschiedliche Immobilisate

## Patentansprüche

1. Anordnung zur Erfassung von optischen Eigenschaften einer Probe (4) einer zu untersuchenden Substanz, umfassend mindestens eine Lichtquelle (1), deren Lichtstrahl (5) ganz oder teilweise auf die Probe (4) gerichtet ist, wobei das Licht als Auf- oder Durchlicht ausgerichtet sein kann, und eine optische Sensoreinheit (3) zur Aufnahme des von der Probe (4) beeinflussten Auf- oder Durchlichtes (6), wobei die Probe (4) unmittelbaren Kontakt zu einer ebenen Oberfläche eines beschichteten oder unbeschichteten Trägermaterials (2) hat, **dadurch gekennzeichnet, dass** diese Oberfläche ganz oder teilweise als mindestens eine Fresnel-Linse (7) ausgebildet ist, wobei das von der Probe (4) beeinflusste Auf- oder Durchlicht (6) durch die Fresnel-Linse (7) zur optischen Sensoreinheit (3) fokussiert ist.

2. Anordnung nach Anspruch 1, **dadurch gekennzeichnet, dass** die Lichtquelle (1) kohärentes oder teilkohärentes Licht oder Licht einer Farbe oder mehrerer diskreter Farben oder Licht eines Farbbereiches oder mehrerer kontinuierlicher Farbbereiche nacheinander aussendet.

3. Anordnung nach Anspruch 1 oder 2, **dadurch gekennzeichnet, dass** die Ebene der Fresnel-Linse (7) parallel zur Sensorfläche (9) der optischen Sensoreinheit (3) angeordnet ist.

4. Anordnung nach einem der Ansprüche 1 bis 3, **dadurch gekennzeichnet, dass** die Fresnel-Linse (7) unmittelbar auf oder in der Oberfläche des Trägermaterials (2) ausgebildet und mit einem Immobilisat (11) ganz oder teilweise beschichtet ist.

5. Anordnung nach einem der Ansprüche 1 bis 3, **dadurch gekennzeichnet, dass** die Fresnel-Linse (7) durch ein Immobilisat (11) selbst ausgebildet ist.

6. Anordnung nach einem der Ansprüche 1 bis 5, **dadurch gekennzeichnet, dass** die Beschichtung oder Ausbildung der mindestens einen Fresnel-Linse (7)
- aus einem Immobilisat (11) für mehrere Fresnel-Linsen (7) oder
- aus unterschiedlichen Immobilisaten (11) für verschiedene Fresnel-Linsen (7) oder
- aus unterschiedlichen Immobilisaten (11) für verschiedenen Bereiche (12) der mindestens einen Fresnel-Linse (7)
besteht, wobei ein Immobilisat (11) auch ein Gemisch von Immobilisaten (11) sein kann.

7. Anordnung nach einem der Ansprüche 1 bis 6, **dadurch gekennzeichnet, dass** zwischen der mindestens einen Fresnel-Linse (7) und der optischen Sensoreinheit (3) ein teildurchlässiger Spiegel (13) angeordnet ist, wobei das Licht der Lichtquelle (1) durch den teildurchlässigen Spiegel (13) als Auflicht auf die Probe (4) gerichtet ist und der am teildurchlässigen Spiegel (13) reflektierte Anteil des Lichtes der Lichtquelle (15) von der optischen Sensoreinheit (3) aufnehmbar ist.

8. Anordnung nach einem der Ansprüche 1 bis 7, **dadurch gekennzeichnet, dass** die Abstände zwischen
- der Sensorfläche (9) und der Fresnel-Linse (7) und/oder
- der Sensorfläche (9) und dem teildurchlässigen Spiegel (13) und/oder
- dem teildurchlässigen Spiegel (13) und der Fresnel-Linse (7) manuell oder mittels steuerbarer Stellglieder (14) veränderbar sind.

9. Anordnung nach einem der Ansprüche 1 bis 8, **dadurch gekennzeichnet, dass** eine Auswerteeinheit (16) mit der optischen Sensoreinheit (3) informationsleitend verbunden ist und mit anderen Teilen der Anordnung informationsleitend verbunden sein kann und/oder mit weiteren Teilen und Geräten außerhalb der Anordnung informationsleitend verbunden ist.

10. Verfahren zur Erfassung von optischen Eigenschaften einer Probe eines zu untersuchenden Materials unter Verwendung einer Anordnung nach einem der Ansprüche 1 bis 9, bei dem die Probe (4) der als Fresnel-Linse (4) ausgeführten Oberfläche und die Sensorwerte der optische Sensoreinheit (3) der Auswerteeinheit (16) zugeführt werden, wobei die Probenzuführung als auch die Übertragung der Sensorwerte jeweils kontinuierlich oder zeitgesteuert oder manuell ausgelöst oder durch sensor- und/oder ereignisgesteuert erfolgt.

11. Verfahren nach Anspruch 10, **dadurch gekennzeichnet, dass** die Sensorwerte der optischen Sensoreinheit (3) als mikroskopische Bilder oder holografisch verstärkte Aufnahmen ausgewertet werden.

12. Verfahren nach Anspruch 10 oder 11, **dadurch gekennzeichnet, dass** durch den gleichzeitigen Einsatz von unterschiedlichen Immobilisaten (11) unterschiedliche atomare und/oder molekulare Bestandteile in einer Probe gleichzeitig detektiert werden.

13. Verfahren nach einem der Ansprüche 10 bis 12, **dadurch gekennzeichnet, dass** die Ergebnisse der Auswertung der Informationen der optischen Sensoreinheit (3) unmittelbar auf die Parameter der Anordnung und des Verfahrens nach einem oder mehreren der Ansprüche 1 bis 9 rückwirken.

14. Verwendung der Anordnung nach einem oder mehrerer der Ansprüche 1 bis 9 und des Verfahrens nach einem oder mehreren der Ansprüche 10 bis 13 zur Detektion von
- Oberflächenstrukturen und optisch bestimmbaren Materialeigenschaften oder
- atomaren und/oder molekularen Bestandteilen in festen, flüssigen oder gasförmigen Proben oder
- Veränderungen in einer Probe durch physikalisch-chemischbiologische Reaktionen.

15. Verwendung einer Anordnung der Anordnung nach einem oder mehrerer der Ansprüche 1 bis 9 und des Verfahrens nach einem oder mehreren der Ansprüche 10 bis 13 für die selektive Detektion von An- oder Einlagerungen mindestens einer spezifischen Biomolekülspezies in Form von DNA, RNA, Peptiden, Proteinen, Antigenen oder Antikörpern in oder an der mindestens einen dünnen Schicht zu Zwecken der Diagnose, wobei eine Markierung der spezifischen Biomolekülspezies nicht notwendig ist.

## Claims

1. Arrangement for detecting optical properties of a sample (4) of a substance to be examined, comprising at least one light source (1), the light beam (5) of which is directed wholly or partially onto the sample (4), it being possible for the light to be directed as incident or transmitted light, and an optical sensor unit (3) for recording the incident or transmitted light (6) influenced by the sample (4), wherein the sample (4) is in direct contact with a flat surface of a coated or uncoated carrier material (2), **characterised in that** this surface is formed wholly or partially as at least one Fresnel lens (7), wherein the incident or transmitted light (6) influenced by the sample (4) is focussed through the Fresnel lens (7) to the optical sensor unit (3).

2. Arrangement according to claim 1, **characterised in that** the light source (1) emits coherent or partially coherent light or light of one colour or several discrete colours or light of one colour range or several continuous colour ranges in succession.

3. Arrangement according to claim 1 or 2, **characterized in that** the plane of the Fresnel lens (7) is arranged parallel to the sensor surface (9) of the optical sensor unit (3).

4. Arrangement according to any one of claims 1 to 3, **characterised in that** the Fresnel lens (7) is formed directly on or in the surface of the carrier material (2) and is wholly or partially coated with an immobilisate (11).

5. Arrangement according to any one of claims 1 to 3, **characterized in that** the Fresnel lens (7) is formed by an immobilisate (11) itself.

6. Arrangement according to any one of claims 1 to 5, **characterized in that** the coating or formation of the at least one Fresnel lens (7) is
- from one immobilisate (11) for several Fresnel lenses (7) or
- different immobilisates (11) for different Fresnel lenses (7) or
- different immobilisates (11) for different regions (12) of the at least one Fresnel lens (7)
wherein an immobilisate (11) can also be a mixture of immobilisates (11).

7. Arrangement according to one of claims 1 to 6, **characterized in that** a partially transparent mirror (13) is arranged between the at least one Fresnel lens (7) and the optical sensor unit (3), the light of the light source (1) being directed through the partially transparent mirror (13) as incident light onto the sample (4) and the portion of the light of the light source (15) reflected at the partially transparent mirror (13) being receivable by the optical sensor unit (3).

8. Arrangement according to any one of claims 1 to 7, **characterised in that** the distances between
- the sensor surface (9) and the Fresnel lens (7) and/or
- the sensor surface (9) and the partially transparent mirror (13) and/or
- the partially transparent mirror (13) and the Fresnel lens (7) manually or by means of controllable actuators (14).

9. Arrangement according to one of claims 1 to 8, **characterised in that** an evaluation unit (16) is connected to the optical sensor unit (3) in an information-conducting manner and can be connected to other parts of the arrangement in an information-conducting manner and/or is connected to further parts and devices outside the arrangement in an information-conducting manner.

10. Method for detecting optical properties of a sample of a material to be examined using an arrangement according to any one of claims 1 to 9, wherein the sample (4) is fed to the surface designed as a Fresnel lens (4) and the sensor values of the optical sensor unit (3) are fed to the evaluation unit (16), the sample feed and the transmission of the sensor values each taking place continuously or time-controlled or manually triggered or by sensor-controlled and/or event-controlled means.

11. Method according to claim 10, **characterised in that** the sensor values of the optical sensor unit (3) are evaluated as microscopic images or holographically enhanced images.

12. Method according to claim 10 or 11, **characterised in that** different atomic and/or molecular constituents in a sample are simultaneously detected by the simultaneous use of different immobilisates (11).

13. Method according to one of claims 10 to 12, **characterized in that** the results of the evaluation of the information of the optical sensor unit (3) have a direct effect on the parameters of the arrangement and the method according to one or more of claims 1 to 9.

14. Use of the arrangement according to one or more of claims 1 to 9 and of the method according to one or more of claims 10 to 13 for the detection of
- surface structures and optically determinable material properties or
- atomic and/or molecular constituents in solid, liquid or gaseous samples, or
- changes in a sample due to physico-chemical-biological reactions.

15. Use of an arrangement of the arrangement according to one or more of claims 1 to 9 and the method according to one or more of claims 10 to 13 for the selective detection of attachments or inclusions of at least one specific biomolecule species in the form of DNA, RNA, peptides, proteins, antigens or antibodies in or on the at least one thin layer for diagnostic purposes, wherein labelling of the specific biomolecule species is not necessary.

## Revendications

1. Dispositif de détection des propriétés optiques d'un échantillon (4) d'une substance à analyser, comprenant au moins une source de lumière (1) dont le faisceau lumineux (5) est dirigé entièrement ou partiellement sur l'échantillon (4), la lumière pouvant être orientée en lumière incidente ou en lumière transmise, et une unité de capteur optique (3) pour recevoir la lumière incidente ou la lumière transmise (6) influencée par l'échantillon (4), l'échantillon (4) étant en contact direct avec une surface plane d'un matériau support (2) revêtu ou non, **caractérisé en ce que** cette surface est réalisée entièrement ou partiellement sous forme d'au moins une lentille de Fresnel (7), la lumière incidente ou transmise (6) influencée par l'échantillon (4) étant focalisée par la lentille de Fresnel (7) vers l'unité de capteur optique (3).

2. Dispositif selon la revendication 1, **caractérisé en ce que** la source lumineuse (1) émet successivement une lumière cohérente ou partiellement cohérente ou une lumière d'une couleur ou de plusieurs couleurs discrètes ou une lumière d'une gamme de couleurs ou de plusieurs gammes de couleurs continues.

3. Dispositif selon la revendication 1 ou 2, **caractérisé en ce que** le plan de la lentille de Fresnel (7) est parallèle à la surface de détection (9) de l'unité de détection optique (3).

4. Dispositif selon l'une des revendications 1 à 3, **caractérisé en ce que** la lentille de Fresnel (7) est formée directement sur ou dans la surface du matériau de support (2) et est revêtue totalement ou partiellement d'un immobilisat (11).

5. Dispositif selon l'une des revendications 1 à 3, **caractérisé en ce que** la lentille de Fresnel (7) est formée par un immobilisât (11) lui-même.

6. Dispositif selon l'une des revendications 1 à 5, **caractérisé en ce que** le revêtement ou la formation de ladite au moins une lentille de Fresnel (7) est réalisé(e) par une couche de matière synthétique.
- d'un immobilisat (11) pour plusieurs lentilles de Fresnel (7) ou
- de différents immobilisats (11) pour différentes lentilles de Fresnel (7) ou
- d'immobilisats (11) différents pour différentes zones (12) de la au moins une lentille de Fresnel (7)
un immobilisat (11) pouvant également être un mélange d'immobilisats (11).

7. Dispositif selon l'une des revendications 1 à 6, **caractérisé en ce qu'**un miroir partiellement transparent (13) est disposé entre la au moins une lentille de Fresnel (7) et l'unité de détection optique (3), la lumière de la source lumineuse (1) étant dirigée sur l'échantillon (4) à travers le miroir partiellement transparent (13) en tant que lumière incidente et la partie de la lumière de la source lumineuse (15) réfléchie sur le miroir partiellement transparent (13) pouvant être captée par l'unité de détection optique (3).

8. Dispositif selon l'une quelconque des revendications 1 à 7, **caractérisé en ce que** les distances entre
- la surface de détection (9) et la lentille de Fresnel (7) et/ou
- la surface de détection (9) et le miroir partiellement transparent (13) et/ou
- le miroir partiellement transparent (13) et la lentille de Fresnel (7)
peuvent être modifiés manuellement ou au moyen d'actionneurs commandables (14).

9. Dispositif selon l'une des revendications 1 à 8, **caractérisé en ce qu'**une unité d'évaluation (16) est reliée à l'unité de capteur optique (3) par une liaison d'informations et peut être reliée à d'autres parties du dispositif par une liaison d'informations et/ou est reliée à d'autres parties et appareils en dehors du dispositif par une liaison d'informations.

10. Procédé de détection des propriétés optiques d'un échantillon d'un matériau à analyser en utilisant un dispositif selon l'une des revendications 1 à 9, dans lequel
l'échantillon (4) est amené à la surface réalisée sous forme de lentille de Fresnel (4) et les valeurs de capteur de l'unité de capteur optique (3) sont amenées à l'unité d'évaluation (16), l'amenée de l'échantillon ainsi que la transmission des valeurs de capteur s'effectuant respectivement en continu ou de manière commandée dans le temps ou déclenchée manuellement ou par commande par capteur et/ou par événement.

11. Procédé selon la revendication 10, **caractérisé en ce que** les valeurs de capteur de l'unité de capteur optique (3) sont évaluées sous forme d'images microscopiques ou d'images holographiquement amplifiées.

12. Procédé selon la revendication 10 ou 11, **caractérisé en ce que** l'utilisation simultanée de différents immobilisats (11) permet de détecter simultanément différents composants atomiques et/ou moléculaires dans un échantillon.

13. Procédé selon l'une des revendications 10 à 12, **caractérisé en ce que** les résultats de l'exploitation des informations de l'unité de détection optique (3) rétroagissent directement sur les paramètres du dispositif et du procédé selon une ou plusieurs des revendications 1 à 9.

14. Utilisation de l'ensemble selon l'une ou plusieurs des revendications 1 à 9 et du procédé selon l'une ou plusieurs des revendications 10 à 13 pour la détection d'objets de surface ou de matière.
- des structures de surface et des propriétés de matériaux optiquement déterminables ou des
- de composants atomiques et/ou moléculaires dans des échantillons solides, liquides ou gazeux, ou
- des modifications dans un échantillon dues à des réactions physico-chimico-biologiques.

15. Utilisation d'un agencement de l'agencement selon l'une ou plusieurs des revendications 1 à 9 et du procédé selon l'une ou plusieurs des revendications 10 à 13 pour la détection sélective de dépôts ou d'inclusions d'au moins une espèce biomoléculaire spécifique sous forme d'ADN, d'ARN, de peptides, de protéines, d'antigènes ou d'anticorps dans ou sur la au moins une couche mince à des fins de diagnostic, un marquage de l'espèce biomoléculaire spécifique n'étant pas nécessaire.
